# EUROPEAN PATENT APPLICATION

(11) **EP 3 231 650 A1**
(43) Date of publication of application: **18.10.2017**
(21) Application number: 17163363.9
(22) Date of filing: 28.03.2017
(51) Int. Cl.: B60K 1/00, H02K 9/06, H02K 9/19, H02K 11/33, B60K 11/02, B60K 11/06

(54) **ROTARY MACHINE AND VEHICLE INCLUDING THE SAME**

(30) Priority: 11.04.2016 JP 2016078923; 20.01.2017 JP 2017008485
(71) Applicant: Mitsubishi Electric Corporation, Tokyo 100-8310 (JP)
(72) Inventor: HIGASHINO, Hiroyuki, Tokyo 100-8310 (JP); CHAZONO, Toshiya, Tokyo 100-8310 (JP)
(74) Representative: Sajda, Wolf E.

(57) **Abstract**

A rotary machine includes: a rotary machine main body (21a) including: a rotator (32); a rotary shaft (23) configured to rotate along with the rotator (32); and a stator (30) surrounding the rotator (32); a circuit unit (15) configured to control rotation of the rotator (32) and arranged so as to face the rotary machine main body (21a) in an axial direction of the rotary shaft (23); and a cooling device (8) arranged between the rotary machine main body (21a) and the circuit unit (15) so as to thermally be connected to the circuit unit (15), and having a cooling flow passage (10) through which a cooling liquid flows. Further, the rotary machine main body (21a) and the cooling device (8) form a cooling air passage (46) by forming a clearance (D) therebetween, and the cooling flow passage (10) in the cooling device (8) is formed in an in-plane region facing the rotary machine main body (21a) in the axial direction of the rotary shaft (23).

## Description

### Technical Field

The present invention relates to a rotary machine having one or more heat generating components and a vehicle including the rotary machine, and more particularly, to a technology of cooling the heat generating components.

### Background Art

As a related-art structure, a rotary machine as described below is known.

In a rotary machine having heat generating components, a cooling structure, which is configured to cool the heat generating components, is arranged. As the cooling structure configured to efficiently cool the heat generating components, there has been known a liquid-cooling cooling structure disclosed in Patent Literature 1.

In Patent Literature 1, in a rotary machine including a rotator and a stator that are accommodated in a cylindrical frame, a cylindrical cooling flow passage, through which a cooling liquid flows, is formed in the frame. The cooling flow passage extends to an axial end surface of the frame, and a heat radiating member (rear portion 1A) is arranged at the axial end surface of the frame to close the cooling flow passage.

Then, a circuit unit, which is configured to drive the rotary machine, is mounted to the heat radiating member, to thereby water-cool heat generating components in the circuit unit through intermediation of the heat radiating member. Further, in Patent Literature 1, a cooling air passage for air-cooling the heat radiating member is formed. In this manner, the heat generating components are cooled by water cooling and air cooling.

### List of Citations

### Patent Literature

Patent Literature 1: Japanese Unexamined Patent Application Publication JP 2013-146 120 A.

### Summary of the Invention

### Technical Problem

In Patent Literature 1 described above, the heat generating components are cooled with the cooling flow passage formed in the frame. However, in this structure, a radial width of the cooling flow passage is difficult to be increased in consideration of a recent demand for downsizing because the cooling flow passage is formed on a further outer side of the stator.

Thus, the radial width of the cooling flow passage is inevitably reduced, with the result that a contact surface of the cooling flow passage with the heat radiating member is formed into a narrow annular surface. Accordingly, although the heat radiating member is air-cooled with the cooling air passage, the heat radiating member is not sufficiently water-cooled. Thus, there is a room for improvement.

The present invention has been made to solve the above-mentioned problem, and has an object to provide a rotary machine capable of increasing a cooling capacity with a cooling flow passage, and a vehicle including the rotary machine.

### Solution to the Problem

According to one embodiment of the present invention, there is provided a rotary machine, including: a rotary machine main body comprising: a rotator; a rotary shaft configured to rotate along with the rotator; and a stator surrounding the rotator; a circuit unit configured to control rotation of the rotator and arranged so as to face the rotary machine main body in an axial direction of the rotary shaft; and a cooling device arranged between the rotary machine main body and the circuit unit so as to thermally be connected to the circuit unit, and having a cooling flow passage through which a cooling liquid flows, the rotary machine main body and the cooling device forming a cooling air passage by forming a clearance therebetween, the cooling flow passage in the cooling device being formed in an in-plane region facing the rotary machine main body in the axial direction of the rotary shaft.

Further, according to one embodiment of the present invention, there is provided a vehicle, including the above-mentioned rotary machine.

### Advantageous Effects of the Invention

According to one embodiment of the present invention, it is possible to increase the cooling capacity by air-cooling the cooling device with the cooling air passage, and by enlarging the cooling flow passage through formation of the cooling flow passage in the cooling device using the in-plane region facing the rotary machine main body in the axial direction of the rotary shaft.

### Brief Description of the Drawings

- FIG. 1: is a schematic sectional view for illustrating an electrical device included in a rotary machine according to Embodiment 1 of the present invention.
- FIG. 2: is a sectional view taken along the line A-A of FIG. 1.
- FIG. 3: is a partially enlarged view of a region I of a heat-radiating fin 9, which is surrounded by the dotted line of FIG. 2.
- FIG. 4: is a partially enlarged view (first example) of a related-art heat-radiating fin as Comparison Example.
- FIG. 5: is a partially enlarged view (second example) of a related-art heat-radiating fin as Comparison Example.
- FIG. 6: is a view for illustrating Modification Example 1 of the heat-radiating fin of FIG. 3.
- FIG. 7: is a view for illustrating Modification Example 2 of the heat-radiating fin of FIG. 3.
- FIG. 8: is a schematic sectional view for illustrating an electrical device included in a rotary machine according to Embodiment 2 of the present invention.
- FIG. 9: is a view for illustrating Modification Example of the electrical device included in the rotary machine according to Embodiment 2 of the present invention.
- FIG. 10: is a schematic sectional view for illustrating an electrical device included in a rotary machine according to Embodiment 3 of the present invention.
- FIG. 11: is a view for illustrating Modification Example of the electrical device included in the rotary machine according to Embodiment 3 of the present invention.
- FIG. 12: is a graph for showing a relationship between a tip angle θ of a tapered shape of the heat-radiating fin illustrated in FIG. 3, FIG. 6, and FIG. 7 and a heat transfer coefficient h, and a relationship between the tip angle θ and a pressure loss P.
- FIG. 13: is a view for illustrating Modification Example of a tip of the tapered shape of the heat-radiating fin illustrated in FIG. 3, FIG. 6, and FIG. 7.
- FIG. 14: is a schematic diagram for illustrating a vehicle including a rotary machine according to Embodiment 5 of the present invention.
- FIG. 15: is a perspective view for illustrating the rotary machine according to Embodiment 5 of the present invention.
- FIG. 16: is an exploded perspective view for illustrating the rotary machine according to Embodiment 5 of the present invention.
- FIG. 17: is a schematic vertical sectional view for illustrating the rotary machine according to Embodiment 5 of the present invention.
- FIG. 18: is a schematic sectional view taken along the line B-B of FIG. 17.
- FIG. 19: is a schematic diagram for illustrating Modification Example 1 of the vehicle including the rotary machine according to Embodiment 5 of the present invention.
- FIG. 20: is a schematic diagram for illustrating Modification Example 2 of the vehicle including the rotary machine according to Embodiment 5 of the present invention.

### Description of Embodiments

Now, embodiments of the present invention are described with reference to the drawings. The present invention is not limited to the embodiments described below. Further, in the following drawings, components denoted by the same reference symbols correspond to the same or equivalent components. This is common throughout the description herein. In addition, the forms of the components described herein are merely examples, and the components are not limited to the description herein.

### Embodiment 1

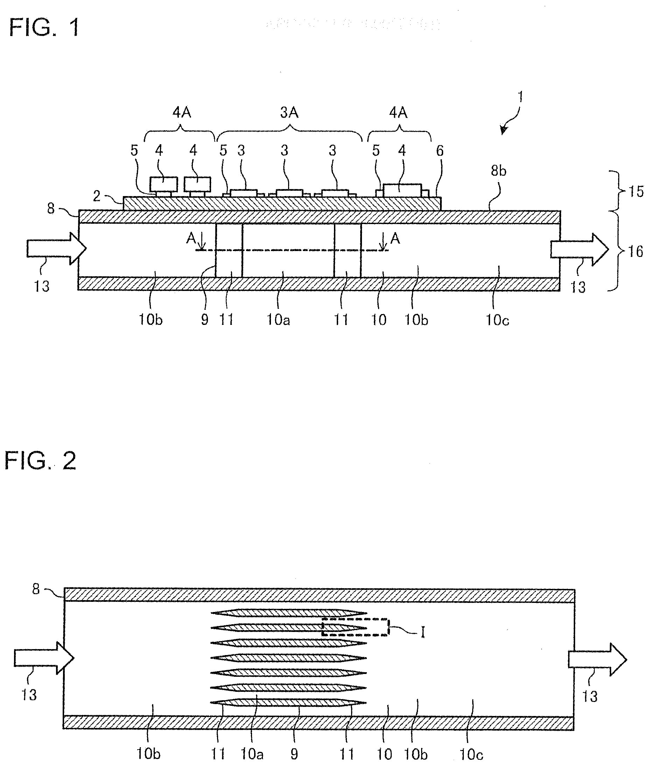

FIG. 1 is a schematic sectional view for illustrating an electrical device included in a rotary machine according to Embodiment 1 of the present invention. FIG. 2 is a sectional view taken along the line A-A of FIG. 1. In FIG. 1 and FIG. 2, arrows 13 indicate a main flow direction of a cooling liquid.

An electrical device 1 of Embodiment 1 is, for example, an inverter configured to control the rotary machine, or a converter configured to convert voltage. The electrical device 1 includes a circuit unit 15, which has various electronic components required for appropriate operation of the inverter or the converter, and a cooling unit 16, which is configured to cool the circuit unit 15 and is mounted so as to be held in contact with the circuit unit 15.

The circuit unit 15 includes a circuit board 2, in which a circuit pattern for electrically connecting the electronic components is formed on a mounting surface 6. The circuit board 2 has a planar shape as illustrated in FIG. 1, and heat generating components are mounted on the circuit pattern as the above-mentioned electronic components. In the following description, a region in which three high heat generating components 3 are arranged is referred to as a high heat generating region 3A.

As the heat generating components, in FIG. 1, three high heat generating components 3 and three low heat generating components 4 are mounted on the circuit pattern. The high heat generating component 3 is, for example, a diode, a MOSFET, an IGBT, or a power module. The low heat generating component 4 is, for example, a resistor, or a capacitor.

The high heat generating component 3 and the low heat generating component 4 each have an electrode 5. The electrode 5 has an L-shape or a linear shape. In the drawings including FIG. 1, as the electrode 5, there is illustrated an electrode lead terminal, which protrudes from a resin mold having a heat generating element thereinside.

The circuit board 2 has an electrode fixed portion (not shown) for fixing the electrode 5. The electrode fixed portion includes, for example, an exposed portion of the circuit pattern, with which the electrode 5 is brought into contact, for surface mounting on the mounting surface 6, or a through hole, through which the electrode 5 is inserted for through hole mounting of the electrode 5.

Then, when the high heat generating components 3 and the low heat generating components 4 are mounted on the mounting surface 6, the electrodes 5 included in the respective heat generating components are electrically connected and fixed to the electrode fixed portion formed in the mounting surface 6. The fixation is performed by joining with, for example, solder or a sintered silver.

In FIG. 1, description is made of a case where the circuit board 2 has a single-sided mounting structure. The circuit board 2 is a metal substrate or a substrate mainly made of an epoxy resin.

The cooling unit 16 includes a hollow box-shaped cooling device 8 having a cooling flow passage 10 thereinside and heat-radiating fins 9, which protrude from an inner wall of the cooling device 8 toward the cooling flow passage 10 and extend along the main flow direction 13 of the cooling liquid.

One surface of outer peripheral surfaces of the cooling device 8 serves as a circuit unit mounting surface 8b, and the circuit board 2 of the circuit unit 15 is mounted so as to be held in contact with the circuit unit mounting surface 8b. The cooling liquid flows through the cooling flow passage 10 in the cooling device 8. The cooling liquid is, for example, water, antifreeze liquid, or refrigerant.

The cooling flow passage 10 is divided into a first flow passage portion 10a facing the high heat generating region 3A, a second flow passage portion 10b facing a low heat generating region 4A, and a third flow passage portion 10c facing a region where the heat generating components are not arranged. Among the first flow passage portion 10a, the second flow passage portion 10b, and the third flow passage portion 10c, in the first flow passage portion 10a facing the high heat generating region 3A, the heat-radiating fins 9, which are configured to efficiently cool the high heat generating components 3, are arranged.

That is, the heat-radiating fins 9 are arranged in the first flow passage portion 10a so as to protrude from an inner wall on the circuit unit mounting surface 8b side facing the high heat generating region 3A in the inner walls of the cooling device 8 toward an inner wall facing the inner wall on the circuit unit mounting surface 8b side.

The heat-radiating fins 9 may be arranged also in the second flow passage portion 10b and the third flow passage portion 10c in order to further efficiently cool the low heat generating components 4. In this case, the heat-radiating fins 9 may be arranged in the first flow passage portion 10a at high density, and the heat-radiating fins 9 may be arranged in the second flow passage portion 10b and the third flow passage portion 10c at low density. However, in the second flow passage portion 10b and the third flow passage portion 10c, it is preferred that the heat-radiating fins 9 be rather not arranged due to the following reasons.

Specifically, when the heat-radiating fins 9 are arranged, there are inevitably caused a friction loss, which is caused by a flow of the cooling liquid in the cooling flow passage 10, and a pressure loss, which is caused by a shape loss caused when a flow passage sectional area is changed. Thus, in consideration of prevention of the pressure loss, it is preferred that the heat-radiating fins 9 be not arranged at portions where heat generating amount is small.

In the electrical device 1 configured as described above, when the electrical device 1 operates, the high heat generating components 3 and the low heat generating components 4 generate heat. The heat is transferred to the cooling unit 16 via the circuit board 2. In the cooling unit 16, the cooling liquid flows through the cooling flow passage 10, with the result that the heat having been transferred to the cooling unit 16 is transferred to the cooling liquid. In this manner, the high heat generating components 3 and the low heat generating components 4 are cooled.

In the cooling flow passage 10, the heat-radiating fins 9 are arranged at the first flow passage portion 10a facing the high heat generating region 3A. A cooling capacity of the first flow passage portion 10a is higher than those of the second flow passage portion 10b and the third flow passage portion 10c. Thus, the high heat generating components 3 arranged in the high heat generating region 3A can efficiently be cooled.

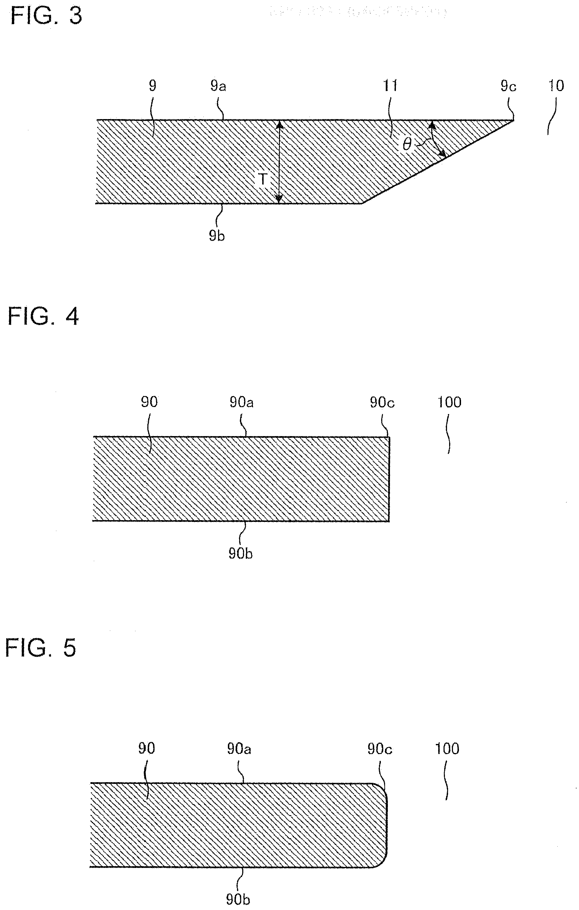

Further, as a feature of Embodiment 1, a shape of the heat-radiating fin 9 is given. Now, the feature is described with reference to FIG. 3 as compared to a related-art shape.

FIG. 3 is a partially enlarged view of a region I of the heat-radiating fin 9, which is surrounded by the dotted line of FIG. 2. FIG. 4 and FIG. 5 are partially enlarged views of a related-art heat-radiating fin as Comparison Examples.

In a related-art heat-radiating fin 90, a shape of a distal end corner portion 90c on each of both ends in the main flow direction of the cooling liquid, that is, in a horizontal direction of FIG. 4 and FIG. 5 is, for example, angular as illustrated in FIG. 4, or rounded as illustrated in FIG. 5. With such a shape, change in sectional shape of a passage 100 between a portion where the heat-radiating fin 90 is arranged and a portion where the heat-radiating fin 90 is not arranged is increased, with the result that the pressure loss is increased.

That is, in the vicinity of the heat-radiating fin 90, a flow of the cooling liquid flowing along a pair of side surfaces 90a and 90b in parallel to the main flow direction is separated from the heat-radiating fin 90 at the distal end corner portion 90c to generate vortices, with the result that the pressure loss is caused.

In contrast to the above-mentioned shapes, as illustrated in FIG. 3, both ends 11 (only one side is illustrated in FIG. 3) of the heat-radiating fin 9 of Embodiment 1 in the main flow direction 13 of the cooling liquid have a tapered shape in which a fin thickness T is gradually reduced. The fin thickness T is a distance between a pair of side surfaces 9a and 9b, which are parallel to the main flow direction 13 of the cooling liquid flowing in the vicinity of the heat-radiating fin 9, or a distance between imaginary surfaces obtained by extending the pair of side surfaces 9a and 9b, which is perpendicular to the main flow direction.

Through formation of the both ends 11 of the heat-radiating fin 9 into a tapered shape as described above, change in sectional-shape of a passage between the portion where the heat-radiating fin 9 is arranged and the portion where the heat-radiating fin 9 is not arranged is gentler than the related-art structure. As a result, the pressure loss can be suppressed.

That is, when the cooling liquid flowing through the cooling flow passage 10 flows from the second flow passage portion 10b or the third flow passage portion 10c to the heat-radiating fin 9 in the first flow passage portion 10a, or when the cooling liquid flowing through the cooling flow passage 10 flows from the heat-radiating fin 9 in the first flow passage portion 10a to the second flow passage portion 10b or the third flow passage portion 10c, the pressure loss can be suppressed.

Further, through arrangement of the heat-radiating fins 9 only at the first flow passage portion 10a, the pressure loss can be suppressed more than in a case where the heat-radiating fins 9 are arranged at all portions of the cooling flow passage 10, that is, all of the first flow passage portion 10a, the second flow passage portion 10b, and the third flow passage portion 10c.

The tapered shape of the both ends 11 of the heat-radiating fin 9 is not limited to the shape in which a tip 9c of the tapered shape is positioned on an extended line of one of the pair of side surfaces 9a and 9b as illustrated in FIG. 3. The tapered shape of the both ends 11 of the heat-radiating fin 9 can be variously modified and carried out, for example, as described below without departing from the scope of the present invention. In FIG. 3, and FIG. 6 and FIG. 7 which are described below, θ represents a tip angle of a tapered shape, and description of the angle is made later.

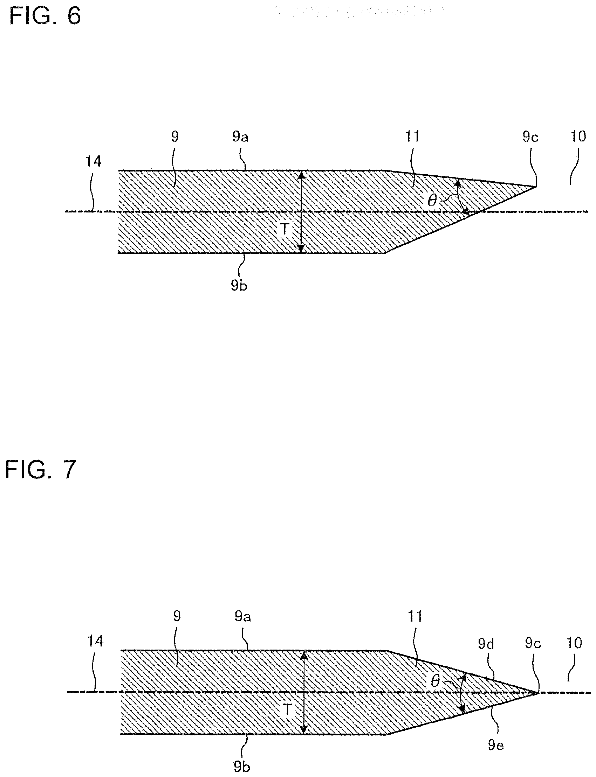

FIG. 6 is a view for illustrating Modification Example 1 of the heat-radiating fin of FIG. 3.

The heat-radiating fin 9 of FIG. 6 has a shape in which the tip 9c of the tapered shape is positioned between a center line 14 of the fin thickness T and an extended line of one of the pair of side surfaces 9a and 9b.

FIG. 7 is a view for illustrating Modification Example 2 of the heat-radiating fin of FIG. 3.

The heat-radiating fin 9 of FIG. 7 has a shape in which the tip 9c of the tapered shape of the heat-radiating fin 9 is positioned on the center line 14 of the fin thickness T of the heat-radiating fin 9.

Similarly to FIG. 3, an effect of suppressing the pressure loss can be obtained even when any one of the tapered shape of FIG. 6 and the tapered shape of FIG. 7 is adopted.

In Embodiment 1, the circuit board 2 is held in contact with the cooling device 8. However, in Embodiment 2 of the present invention, the heat generating components themselves, which are heat generating sources mounted to the circuit board 2, are directly held in contact with the cooling device 8.

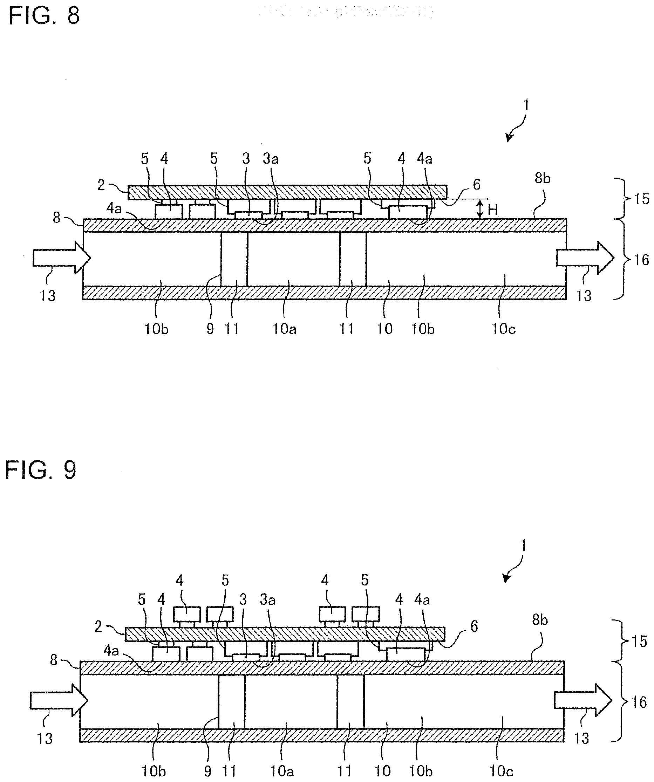

FIG. 8 is a schematic sectional view for illustrating an electrical device included in a rotary machine according to Embodiment 2 of the present invention. Embodiment 2 is different from Embodiment 1 only in a portion where the circuit unit 15 is mounted to the cooling unit 16, and hence only the different portion is described. Modification Example applied to a component part of the above-mentioned Embodiment 1 is similarly applied to the same component part of Embodiment 2. With this regard, the same applies to Embodiments described later.

In Embodiment 2, the circuit unit 15 is mounted to the cooling unit 16 so that the high heat generating components 3 and the low heat generating components 4 themselves are held in contact with the cooling device 8 of the cooling unit 16. When the high heat generating components 3 and the low heat generating components 4 are mounted to the circuit board 2, for example, a length of the electrode 5 is adjusted so that a height H from the mounting surface 6 to a surface 3a on a side opposite to the electrode 5 of the high heat generating component 3 and a height H from the mounting surface 6 to a surface 4a on a side opposite to the electrode 5 of the low heat generating component 4 are equal to each other.

With this, the surface 3a of the high heat generating component 3 and the surface 4a of the low heat generating component 4 are flush with each other. The circuit unit mounting surface 8b of the cooling device 8 has a planar shape, and hence the high heat generating components 3 and the low heat generating components 4 are mounted so as to directly be held in contact with the cooling device 8 when the surface 3a of the high heat generating component 3 and the surface 4a of the low heat generating component 4 are flush with each other.

As described above, according to Embodiment 2, the same effects as Embodiment 1 can be obtained. In addition, when the high heat generating components 3 and the low heat generating components 4, which are the heat generating sources, are mounted so as to directly be held in contact with the cooling device 8, the high heat generating components 3 and the low heat generating components 4 can more efficiently be cooled.

Further, the circuit unit mounting surface 8b has a planar shape, and does not have a non-planar shape having irregularities. Therefore, the cooling device 8 can easily be manufactured with a mold, for example, by molding or die casting, thereby being capable of reducing a cost of the mold.

As a Modification Example of Embodiment 2, the following configuration illustrated in FIG. 9 may be adopted.

FIG. 9 is a view for illustrating a Modification Example of the electrical device included in the rotary machine according to Embodiment 2 of the present invention.

As illustrated in FIG. 9, the high heat generating components 3 and the low heat generating components 4 may be mounted on both sides of the circuit board 2. When both sides of the circuit board 2 serve as the mounting surfaces in this manner, a mounting area can be increased as compared to the configuration in which only one side serves as the mounting surface. Thus, in order to secure a certain mounting area, when the circuit board 2 has a configuration in which both sides serve as the mounting surfaces, the circuit board 2 can be downsized as compared to the circuit board 2 in which only one side serves as the mounting surface.

As a result, the cooling device 8 can also be downsized, with the result that the entire electrical device 1 can be downsized. At this time, it is preferred that the heat generating components mounted on, among the mounting surfaces 6 on both sides, the mounting surface 6 side, which is not held in contact with the circuit unit mounting surface 8b of the cooling device 8, be the low heat generating components 4. Further, the circuit board 2 may be a so-called multi-layer board having multi-layer circuit pattern layers.

### Embodiment 3

In Embodiment 2, not the circuit board 2 side but the heat generating component side is directly held in contact with the cooling device 8. Further, the circuit unit mounting surface 8b of the cooling unit 16 has a planar shape. Embodiment 3 of the present invention is similar to Embodiment 2 in that not the circuit board 2 side but the heat generating component side is directly held in contact with the cooling device 8. However, Embodiment 3 is different from Embodiment 2 in that the circuit unit mounting surface 8b has a non-planar shape.

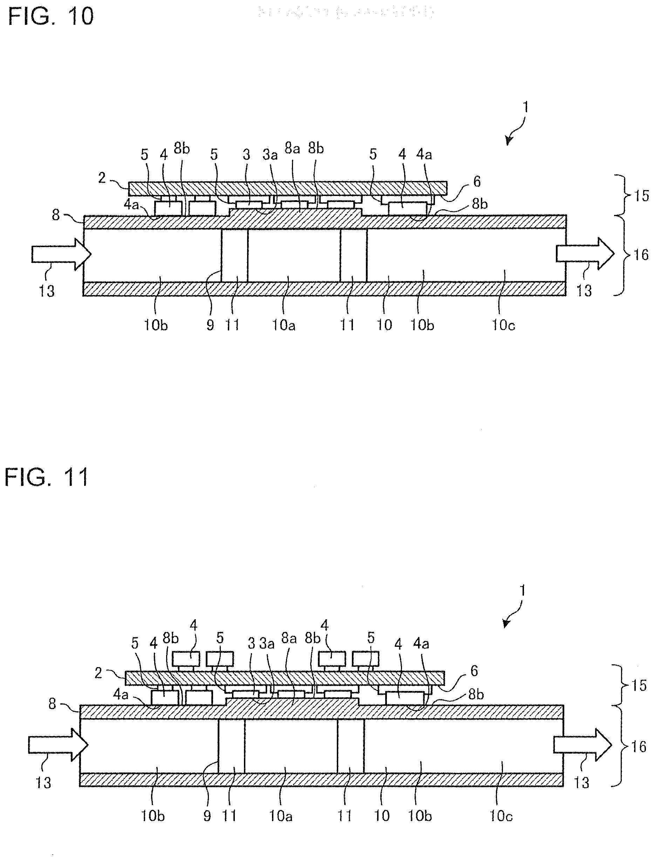

FIG. 10 is a schematic sectional view for illustrating an electrical device included in a rotary machine according to Embodiment 3 of the present invention. Embodiment 3 is different from Embodiment 1 and Embodiment 2 only in a configuration in which the circuit unit 15 is mounted to the cooling unit 16. Thus, description is made of parts different from Embodiment 1 and Embodiment 2.

A current flows in each of the electrodes 5 of the high heat generating components 3 and the low heat generating components 4. In order to minimize Joule heat generated by the current, it is preferred that the length of the electrode 5 be reduced. Thus, here, through use of the electrode 5 having a length set in consideration of this regard, the high heat generating components 3 and the low heat generating components 4 are mounted on the circuit board 2.

However, when the high heat generating components 3 and the low heat generating components 4 are mounted in this manner, the height from the mounting surface 6 to the surface 3a of the high heat generating component 3 and the height from the mounting surface 6 to the surface 4a of the low heat generating component 4 are not uniform.

In Embodiment 3, the circuit unit mounting surface 8b of the cooling device 8 has a surface shape having irregularities in accordance with the non-uniformity of the heights. In this manner, the high heat generating components 3 and the low heat generating components 4 are mounted so as to directly be held in contact with the circuit unit mounting surface 8b.

Specifically, when dimensions of the heat generating components in a direction of clearance between the circuit unit mounting surface 8b of the cooling device 8 and the mounting surface 6 are not uniform, a part of the circuit unit mounting surface 8b, on which the heat generating components having small dimensions are mounted, is a projecting portion 8a.

According to Embodiment 3, the same effects as Embodiment 2 can be obtained. In addition, the circuit unit mounting surface 8b of the cooling device 8 has a convexoconcave shape which offsets the irregularities among the heights of the high heat generating components 3 and the low heat generating components 4.

Accordingly, there is no need to adjust the lengths of the electrodes 5 of the high heat generating components 3 and the low heat generating components 4 so as to level the heights of the surfaces 3a and 4a, thereby being capable of setting the lengths of the electrodes 5 at requisite minimum. Therefore, an original amount of Joule heat to be generated in the high heat generating components 3 and the low heat generating components 4 can be minimized.

Incidentally, in FIG. 10, there are illustrated the high heat generating components 3 and the low heat generating components 4, which have the electrodes 5 being electrode lead terminals and are mounted to the electrode fixed portion on the circuit board 2 through the mounting method of joining by soldering, but the heat generating component of surface mounting type may be adopted. Even when the surface mounting type is adopted, the structure of Embodiment 3 is effective.

As a Modification Example of Embodiment 3, the following configuration illustrated in FIG. 11 may be adopted.

FIG. 11 is a view for illustrating Modification Example of the electrical device included in the rotary machine according to Embodiment 3 of the present invention.

As illustrated in FIG. 11, the high heat generating components 3 and the low heat generating components 4 may be mounted on both sides of the circuit board 2. When both sides of the circuit board 2 serve as the mounting surfaces in this manner, a mounting area can be increased as compared to the configuration in which only one side serves as the mounting surface. Thus, in order to secure a certain mounting area, when the circuit board 2 has a configuration in which both sides serve as the mounting surfaces, the circuit board 2 can be downsized as compared to the circuit board 2 in which only one side serves as the mounting surface.

As a result, the cooling device 8 can also be downsized, with the result that the entire electrical device 1 can be downsized. At this time, it is preferred that the heat generating components mounted on, among the mounting surfaces 6 on both sides, the mounting surface 6 side, which is not held in contact with the circuit unit mounting surface 8b of the cooling device 8, be the low heat generating components 4.

### Embodiment 4

In Embodiment 4, description is made of an evaluation of the tapered shape of the heat-radiating fin 9 illustrated in FIG. 3, FIG. 6, and FIG. 7.

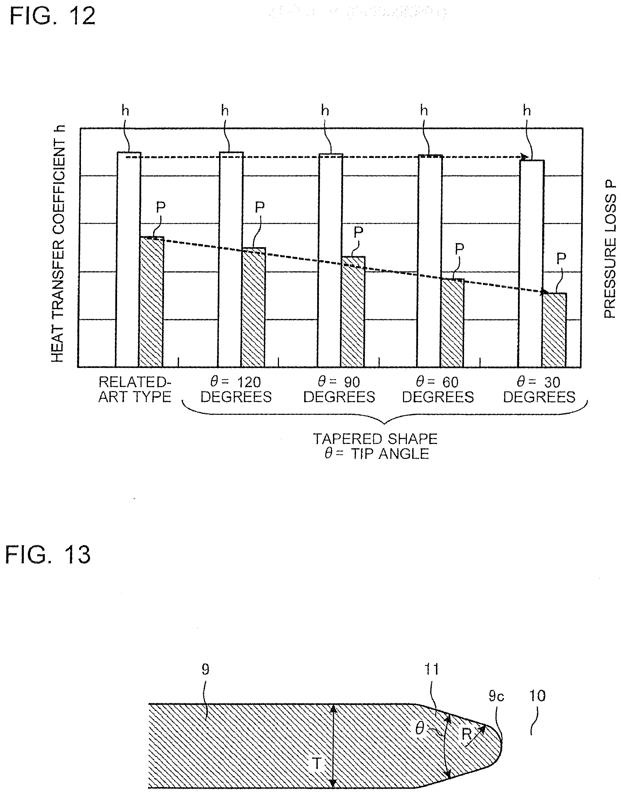

FIG. 12 is a graph for showing a relationship between the tip angle θ of the tapered shape of the heat-radiating fin illustrated in FIG. 3, FIG. 6, and FIG. 7 and the heat transfer coefficient h, and a relationship between the tip angle θ and a pressure loss P. The bar on a left side in each of the tip angles represents the heat transfer coefficient h, the bar on a right side in each of the tip angles represents the pressure loss P.

Further, the related-art type in FIG. 12 represents the heat-radiating fin 90 illustrated in FIG. 4. As shown in FIG. 12, as compared to the related-art type, the pressure loss P can be suppressed by reducing the tip angle θ while the heat transfer coefficient h is maintained. In particular, when the tip angle θ = 90°or less, the pressure loss P can remarkably be suppressed.

Further, as illustrated in FIG. 7, it is preferred that the tapered shape be formed such that two surfaces 9d and 9e forming the tip angle θ are symmetrical with respect to the center line 14 of the fin thickness T. This is because, when the cooling liquid flowing through the cooling flow passage 10 flows from an outside of the heat-radiating fin 9 toward the heat-radiating fin 9, or from the heat-radiating fin 9 toward the outside of the heat-radiating fin 9, the cooling liquid is prevented from unevenly flowing on one side.

In this manner, through prevention of the uneven flow of the cooling liquid, the cooling liquid can be caused to evenly flow on both outer sides of the pair of side surfaces 9a and 9b of the heat-radiating fin 9 along the main flow direction 13 of the cooling liquid, with the result that radiation performance can further be prevented from being non-uniform.

FIG. 13 is a view for illustrating Modification Example of a tip of the tapered shape of the heat-radiating fin illustrated in FIG. 3, FIG. 6, and FIG. 7.

As illustrated in FIG. 13, the tip 9c of the tapered shape of the heat-radiating fin 9 may have a curved shape having a curvature radius R. In a case where the heat-radiating fin 9 is manufactured with a mold, for example, by molding or die casting, when a molded product is removed from a mold, a portion having an acute angle, that is, a portion having an angle of 90° or less is difficult to be removed.

However, when the portion having an acute angle has a curved shape, the molded product can easily be removed. Thus, the molded product can easily be removed from a mold by forming the tip 9c into a curved shape.

### Embodiment 5

In Embodiment 5 of the present invention, description is made of a product configuration to which the electrical device 1 described in Embodiments 1 to 4 is applied.

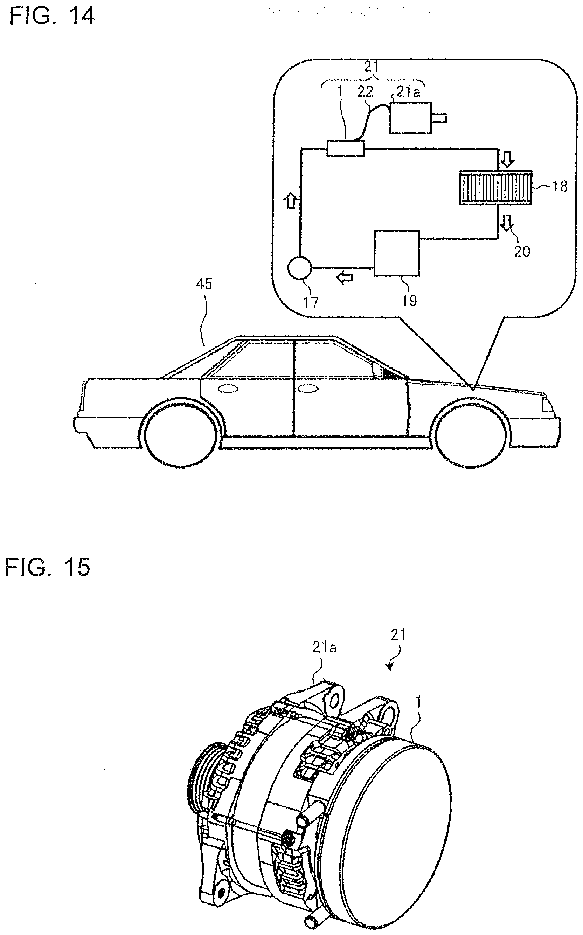

FIG. 14 is a schematic diagram for illustrating a vehicle including a rotary machine according to Embodiment 5 of the present invention. In FIG. 14, arrows 20 indicate a flow of the cooling liquid. A vehicle 45 of Embodiment 5 includes a rotary machine 21 having the electrical device 1 described in Embodiments 1 to 4. The vehicle 45 is, for example, an automobile or a railway vehicle.

In FIG. 14, an example in which the vehicle 45 is the automobile is given. In such a vehicle 45, the electrical device 1 is the inverter or the converter, which is configured to control the rotary machine 21 being a power source for driving the vehicle 45, or the rotary machine 21 being a power generator for generating electricity used in the vehicle 45.

As illustrated in FIG. 14, a rotary machine main body 21 a and the electrical device 1 are electrically connected to each other through an electric wiring 22 to form the rotary machine 21. Further, the vehicle 45 including the rotary machine 21 further includes a pump 17 configured to convey the cooling liquid, a radiator 18, and a tank 19 in addition to the rotary machine 21.

The radiator 18 is configured to cool the cooling liquid through heat exchange with an outside air. Then, the cooling liquid is circulated through the cooling flow passage 10 in the cooling device 8 of the electrical device 1, the radiator 18, and the tank 19 by the pump 17.

In the vehicle 45 configured as described above, the cooling liquid is fed to the cooling flow passage 10 in the cooling device 8 by the pump 17. When passing through the cooling flow passage 10, the cooling liquid cools the high heat generating components 3 and the low heat generating components 4, which are mounted to the electrical device 1, to rise in temperature. The cooling liquid having risen in temperature is cooled through heat exchange with air at the radiator 18. After that, the cooling liquid flows into the pump 17 via the tank 19, and fed to the cooling flow passage 10 in the cooling device 8 again.

Now, description is made of the rotary machine 21.

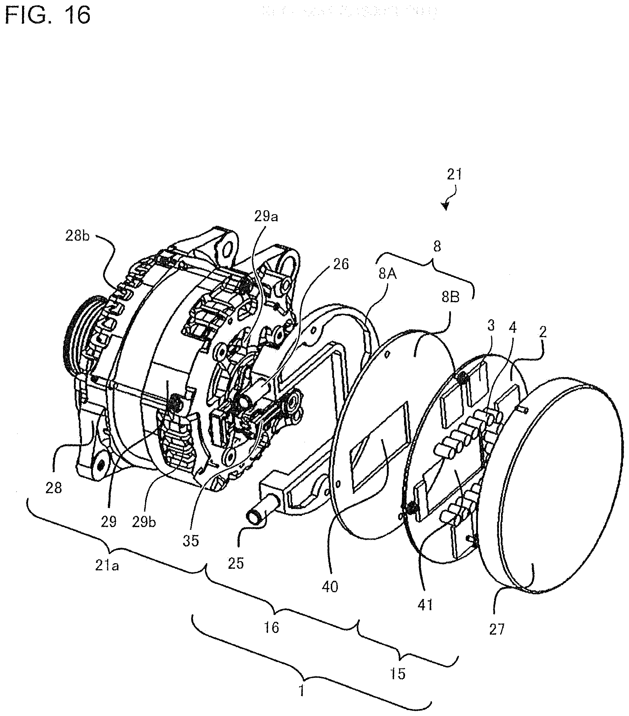

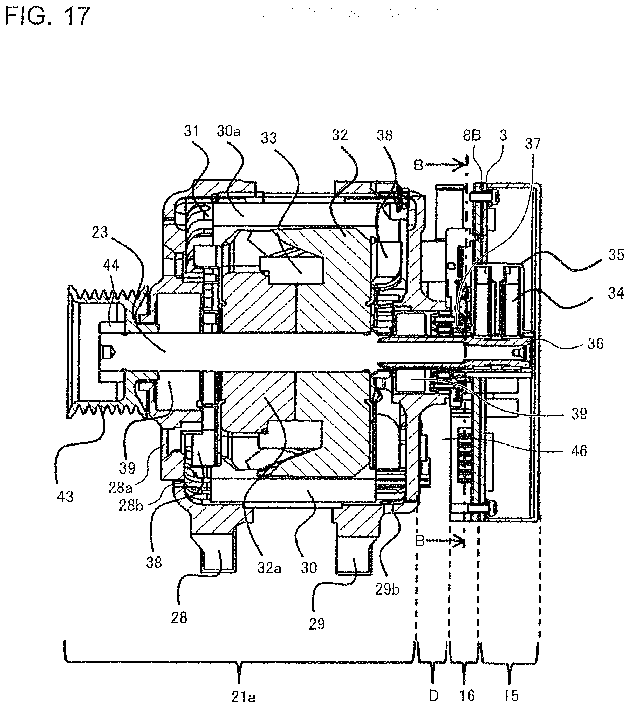

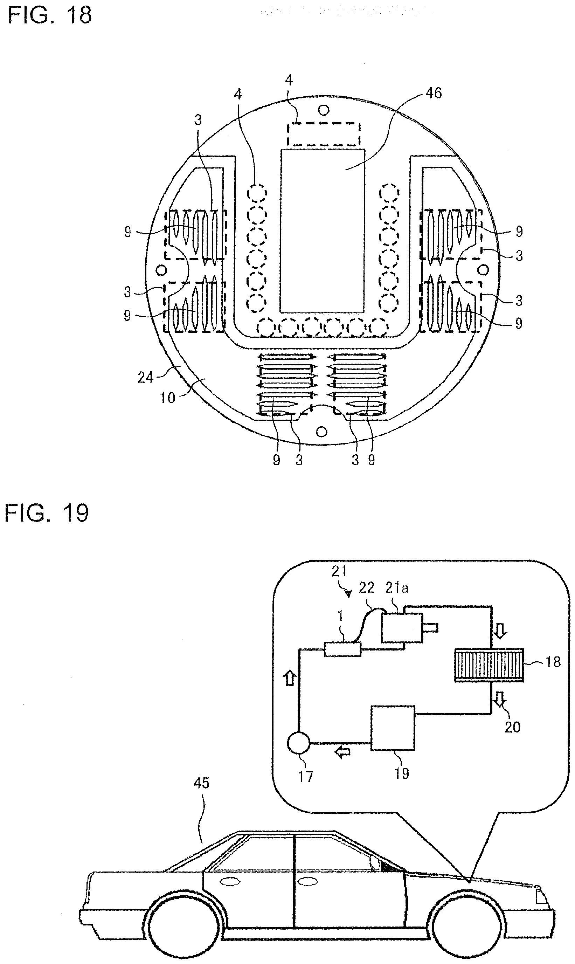

FIG. 15 is a perspective view for illustrating the rotary machine according to Embodiment 5 of the present invention. FIG. 16 is an exploded perspective view for illustrating the rotary machine according to Embodiment 5 of the present invention. FIG. 17 is a schematic vertical sectional view for illustrating the rotary machine according to Embodiment 5 of the present invention. FIG. 18 is a schematic sectional view taken along the line B-B of FIG. 17.

As described above, the rotary machine 21 includes the rotary machine main body 21 a and the electrical device 1. The electrical device 1 and the rotary machine main body 21a are coupled to each other with, for example, screws or bolts. At this time, as illustrated in FIG. 17, a clearance D is formed between the cooling unit 16 of the electrical device 1 and the rotary machine main body 21 a.

With this clearance D, there is formed a cooling air passage 46 through which air from a fan 38 passes. An outer shape of the rotary machine 21 is substantially circular as viewed from an axial direction except for portions such as a hole or a screw portion for mounting the rotary machine 21 to the vehicle 45 and the like.

As illustrated in FIG. 17, the rotary machine main body 21 a includes a rotator 32 and a stator 30 surrounding the rotator 32. An outer shape of the stator 30 is circular, and the stator 30 includes a stator core 30a and a stator winding 31. The stator 30 is supported in an inside of a substantially cylindrical front bracket 28 and in an inside of a substantially cylindrical rear bracket 29.

The rotator 32 is arranged in the stator 30 so as to face the stator 30. The rotator 32 includes a rotator core 32a, a field winding 33 wound around the rotator core 32a, and a rotary shaft 23 configured to rotate along with the rotator 32. Both ends of the rotary shaft 23 of the rotator 32 are supported by the front bracket 28 and the rear bracket 29 through intermediation of bearings 39 in a rotatable manner.

Further, a portion on a further end side with respect to the portion supported by the bearing 39 in one end of the rotary shaft 23 is coupled to a pulley 43 with a nut 44. Further, the fans 38, which are driven by the rotary shaft 23 to generate a cooling air, are mounted to both end surfaces of the rotator core 32a in the axial direction.

The rotary shaft 23 protrudes from the rear bracket 29 of the rotary machine 21 to an outside thereof, and a slip ring 36 is arranged at the protruding portion of the rotary shaft 23. Therefore, the slip ring 36 is arranged on the outer side of the rear bracket 29. The slip ring 36 is configured to supply current to the field winding 33.

A brush 34, which is configured to energize the field winding 33, is held in contact with the slip ring 36 in a slidable contact manner. The brush 34 is held by a brush holder 35. A current is supplied to the brush 34 by components mounted to the circuit board 2. Further, the rotator 32 includes a rotation angle sensor 37 configured to detect a rotation state of the rotator 32.

The rotary machine main body 21 a configured as described above is air-cooled through rotation of the fans 38, which are arranged on the front side and the rear side of the rotary machine main body 21 a. That is, through rotation of the fan 38 arranged on the front side of the rotary machine main body 21a, an outside air flows into the front bracket 28 through a first front bracket hole 28a. An inside of the front bracket 28 is air-cooled by the air having flowed into the front bracket 28, and the air after air-cooling the inside of the front bracket 28 is exhausted through a second front bracket hole 28b.

Further, through rotation of the fan 38 arranged on the rear side of the rotary machine main body 21 a, the outside air flows into the rear bracket 29 through a first rear bracket hole 29a via the cooling air passage 46. The air having flowed into the rear bracket 29 air-cools an inside of the rear bracket 29, and the air after cooling the inside of the rear bracket 29 is exhausted through a second rear bracket hole 29b.

As described above, the electrical device 1 included in the rotary machine 21 includes the circuit unit 15 and the cooling unit 16. The circuit unit 15 is a part for controlling the rotation of the rotator 32. The circuit unit 15 includes the circuit board 2, the high heat generating components 3 and the low heat generating components 4 which are mounted on the circuit board 2, and a circuit unit cover 27 for covering the circuit board 2. The cooling unit 16 includes the cooling device 8 and the heat-radiating fins 9.

Through application of the circuit unit 15 and the cooling unit 16 to the rotary machine 21, the circuit unit 15 and the cooling unit 16 are formed into a circular shape in conformity with an outer shape of the rotary machine main body 21 a. Specifically, the circuit board 2, the circuit unit cover 27, and the cooling device 8 are formed to have a circular outer shape.

Each of the circular shapes of the circuit unit 15 and the cooling unit 16 may have a diameter equal to a diameter of the rotary machine 21, or may have a diameter different from the diameter of the rotary machine 21. Further, each of the circular shapes of the circuit unit 15 and the cooling unit 16 may be an exact circle or an oval shape.

The cooling device 8 includes a water passage plate 8A and a water passage cover 8B, which have a circular shape. The water passage plate 8A has a recessed portion recessed in the axial direction. An opening surface of the recessed portion is covered with the water passage cover 8B, with the result that the cooling flow passage 10 is formed in the cooling device 8. An outer surface of the water passage cover 8B corresponds to the circuit unit mounting surface 8b of Embodiment 1.

As illustrated in FIG. 18, the cooling flow passage 10 is formed into a substantially U-shape as viewed from the axial direction. Further, as illustrated in FIG. 16, an inlet nipple 25, which is configured to supply the cooling liquid, and an outlet nipple 26, which is configured to discharge the cooling liquid through the cooling flow passage 10, are connected to both ends of the U-shape. The inlet nipple 25 corresponds to an inlet pipe of the present invention, and the outlet nipple 26 corresponds to an outlet pipe of the present invention.

Here, as a feature of Embodiment 5, the cooling flow passage 10 is widely formed in a radial direction using an in-plane region facing the rotary machine main body 21 a in the axial direction of the rotary shaft 23. Through formation of the cooling flow passage 10 as described above, a cooling area can be increased as compared to the related-art configuration in which the narrow cylindrical cooling flow passage is formed in the frame positioned on an outer side of the stator, with the result that the cooling capacity can be enhanced.

Further, when the cooling flow passage is formed in the frame positioned on the outer side of the stator as in the related art, the passage is liable to be long, and hence the pressure loss is increased. However, in Embodiment 5, the cooling flow passage 10 is formed within the in-plane region facing the rotary machine main body 21 a in the axial direction of the rotary shaft 23, and hence a length of the cooling flow passage 10 from the inlet nipple 25 to the outlet nipple 26 is reduced. Accordingly, the pressure loss can be reduced as compared to the related-art configuration.

Further, as illustrated in FIG. 18, the heat-radiating fins 9 are arranged on an inner wall of the cooling device 8 at portions facing the high heat generating components 3. The inner wall of the cooling device 8 is, specifically, an inner wall of the water passage cover 8B being a wall portion facing the circuit unit 15.

Further, the heat-radiating fins 9 protrude from the inner wall of the water passage cover 8B toward the cooling flow passage 10. The heat-radiating fin 9 has the configuration illustrated in FIG. 3, FIG. 6, FIG. 7, and FIG. 13. With this, the high heat generating components 3 and the low heat generating components 4 can efficiently be cooled.

A cooling unit through hole 40, through which the rotary shaft 23 of the rotator 32 is inserted, is formed in the water passage cover 8B of the cooling device 8. Further, similarly to the water passage cover 8B, a circuit unit through hole 41, through which the rotary shaft 23 of the rotator 32 is inserted, is formed in the circuit board 2. In this manner, a space through which the rotary shaft 23 is inserted is formed in the cooling device 8.

From a different viewpoint, a space in the vicinity of the rotary shaft 23 can be used as a mounting space for the electrical device 1. Therefore, a length of the rotary machine 21 in a rotary shaft 23 direction can be set smaller than a case where the mounting space for the electrical device 1 is separately formed at an end of the rotary shaft 23 without forming the cooling unit through hole 40 in the cooling unit 16 and the circuit unit through hole 41 in the circuit board 2. The cooling unit through hole 40 corresponds to a first through hole of the present invention, and the circuit unit through hole 41 corresponds to a second through hole of the present invention.

In the rotary machine 21 configured as described above, the heat of the high heat generating components 3 and the low heat generating components 4 is transferred to the cooling unit 16 via the circuit board 2. The heat having been transferred to the cooling unit 16 is transferred to the cooling liquid passing through the cooling flow passage 10 to be radiated. Here, when the heat-radiating fin 9 has the configuration illustrated in FIG. 3, FIG. 6, FIG. 7, and FIG. 13, the high heat generating components 3 and the low heat generating components 4 can efficiently be cooled.

Further, as described above, the cooling flow passage 10 is widely formed in the radial direction through use of the in-plane region facing the rotary machine main body 21 a in the axial direction of the rotary shaft 23, and a passage area of the cooling flow passage 10 is increased. Therefore, a large amount of the cooling liquid can be caused to flow, and hence the high heat generating components 3 and the low heat generating components 4 can efficiently be cooled.

Further, the cooling device 8 is air-cooled by air passing through the cooling air passage 46, and hence heat having been transferred from the high heat generating components 3 and the low heat generating components 4 to the cooling device 8 can efficiently be radiated.

In this manner, in Embodiment 5, the high heat generating components 3 and the low heat generating components 4 can efficiently be cooled because the air cooling is performed in the cooling air passage 46 in addition to the cooling in the cooling flow passage 10.

Further, as described above, the pressure loss of the cooling liquid caused in the cooling flow passage 10 can be reduced, and hence load to be applied to the pump 17 can be reduced. With such reduction in pressure loss, the pump 17 can be downsized or replaced with an inexpensive pump.

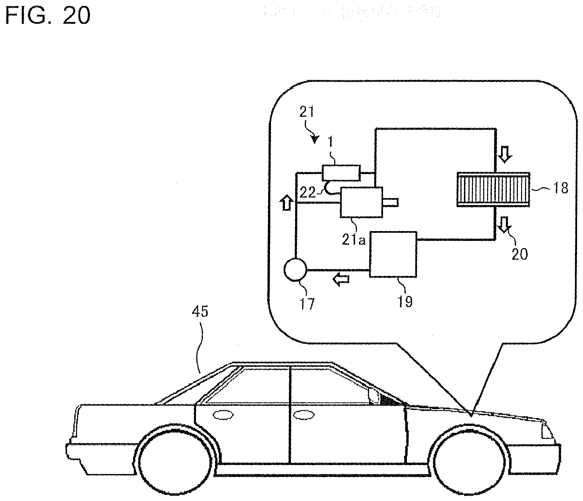

In FIG. 14, the configuration in which only the electrical device 1 has the cooling flow passage is illustrated. However, the configuration of the present invention is not limited thereto and may have a configuration in which the rotary machine main body 21 a also has the cooling flow passage as illustrated in FIG. 19 or FIG. 20.

FIG. 19 is a schematic diagram for illustrating Modification Example 1 of the vehicle including the rotary machine according to Embodiment 5 of the present invention.

As illustrated in FIG. 19, when the rotary machine main body 21a also has the cooling flow passage, the cooling liquid may be circulated through the pump 17, the cooling flow passage 10 in the cooling device 8 of the electrical device 1, the cooling flow passage 10 in the rotary machine main body 21 a, the radiator 18, and the tank 19.

With such a configuration, the cooling liquid is fed to the cooling flow passage 10 in the cooling device 8 by the pump 17, and cools the high heat generating components 3 and the low heat generating components 4, which are mounted to the circuit board 2, when passing through the cooling flow passage 10.

The cooling liquid, which has cooled the high heat generating components 3 and the low heat generating components 4, further passes through the cooling flow passage in the rotary machine main body 21 a and cools the rotary machine 21, to thereby rise in temperature.

The cooling liquid having risen in temperature is cooled at the radiator 18 through heat exchange with air. Then, the cooling liquid flows into the pump 17 via the tank 19, and fed to the cooling flow passage 10 in the cooling device 8 again. The air cooling of the cooling device 8 by the air, which passes through the cooling air passage 46, is similarly performed also in Modification Example 1 and following Modification Example 2.

FIG. 20 is a schematic diagram for illustrating Modification Example 2 of the vehicle including the rotary machine according to Embodiment 5 of the present invention.

As illustrated in FIG. 20, the electrical device 1 and the rotary machine main body 21 a may be connected in parallel so that the cooling flow passages for the cooling liquid are in parallel.

In Modification Example 1 and Modification Example 2, a mode of the cooling flow passage formed in the rotary machine main body 21 a is not particularly limited. However, similarly to the related-art technology, the cooling flow passage may be formed in an outer periphery of the stator 30, or formed in other modes.

Embodiments of the present invention are described above, but merely an example is illustrated in the above-mentioned drawings. As described below, the present invention may adopt various modes.

The number of the heat generating components illustrated in the drawings is not limited to the illustrated number, and any number of the heat generating components may be mounted as long as the number is one or more.

Further, in the above description, there is described the case where the high heat generating components 3 and the low heat generating components 4, that is, two types of the heat generating components which are different in heat generating amount are mounted.

However, the present invention is also applicable to a configuration in which the heat generating components of one type having the same heat generating amount are mounted. That is, the heat-radiating fins 9 may be arranged correspondingly to a part where the heat generating components are mounted, and the both ends 11 may be formed into the above-mentioned shape.

The main flow direction 13 of the cooling liquid indicated in the cooling flow passage 10 is not limited to the indicated direction, and the cooling liquid may be caused to flow in any direction.

The number of the heat-radiating fins 9 is not limited to the illustrated number, and the number of the heat-radiating fins 9 being arranged may be increased or decreased.

The rotator 32 may include the rotation angle sensor 37 configured to detect the rotation state of the rotator 32.

Embodiments 1 to 5 are described as different embodiments. However, the rotary machine and the vehicle may be constructed through appropriate combination of the characteristic configurations and processing in each embodiment. Further, in each of the Embodiments 1 to 5, a Modification Example applied to the same component part is similarly applied to other Embodiments than the embodiment in which the Modification Example is described.

### List of Reference Signs

- 1: electrical device
- 2: circuit board
- 3: high heat generating component
- 3A: high heat generating region
- 3a: surface
- 4: low heat generating component
- 4A: low heat generating region
- 4a: surface
- 5: electrode
- 6: mounting surface
- 8: cooling device
- 8A: water passage plate
- 8B: water passage cover
- 8a: projecting portion
- 8b: circuit unit mounting surface
- 9: heat-radiating fins
- 9a: side surface
- 9b: side surface
- 9c: tip
- 9d: surface
- 9e: surface
- 10: cooling flow passage
- 10a: first flow passage portion
- 10b: second flow passage portion
- 10c: third flow passage portion
- 11: both ends
- 13: main flow direction
- 14: center line
- 15: circuit unit
- 16: cooling unit
- 17: pump
- 18: radiator
- 19: tank
- 20: arrow
- 21: rotary machine
- 21a: rotary machine main body
- 22: electric wiring
- 23: rotary shaft
- 25: inlet nipple
- 26: outlet nipple
- 27: circuit unit cover
- 28: front bracket
- 28a: first front bracket hole
- 28b: second front bracket hole
- 29: rear bracket
- 29a: first rear bracket hole
- 29b: second rear bracket hole
- 30: stator
- 30a: stator core
- 31: stator winding
- 32: rotator
- 32a: rotator core
- 33: field winding
- 34: brush
- 35: brush holder
- 36: slip ring
- 37: angle sensor
- 38: fan
- 39: bearings
- 40: through hole
- 41: circuit unit through hole
- 43: pulley
- 44: nut
- 45: vehicle
- 46: cooling air passage
- D: clearance between rotator body and cooling device

## Claims

1. A rotary machine, comprising:
- a rotary machine main body (21 a) comprising:
a rotator (32);
a rotary shaft (23) configured to rotate along with the rotator (32); and
a stator (30) surrounding the rotator (32);
a circuit unit (15) configured to control rotation of the rotator (32) and arranged so as to face the rotary machine main body (21 a) in an axial direction of the rotary shaft (23); and
- a cooling device (8) arranged between the rotary machine main body (21 a) and the circuit unit (15) so as to thermally be connected to the circuit unit (15), and having a cooling flow passage (10) through which a cooling liquid flows,
- the rotary machine main body (21a) and the cooling device (8) forming a cooling air passage (46) by forming a clearance therebetween, and
- the cooling flow passage (10) in the cooling device (8) being formed in an in-plane region facing the rotary machine main body (21 a) in the axial direction of the rotary shaft (23).

2. The rotary machine of claim 1,
wherein the cooling device (8) has a first through hole (40) through which the rotary shaft (23) is inserted, and is arranged so as to face the rotary machine main body (21a) in the axial direction of the rotary shaft (23) under a state in which the rotary shaft (23) is inserted into the first through hole (40).

3. The rotary machine of claim 2, wherein
the cooling device (8) has a circular shape as viewed from the axial direction, and
the cooling flow passage (10) is formed into a substantially U-shape so as to avoid the first through hole (40).

4. The rotary machine of claim 3,
wherein one end of the substantially U-shape is connected to an inlet pipe for supplying the cooling liquid to the cooling flow passage (10), and another end of the substantially U-shape is connected to an outlet pipe for discharging the cooling liquid from the cooling flow passage (10).

5. The rotary machine of any one of claims 1 to 4,
wherein the circuit unit (15) has a second through hole (41) through which the rotary shaft (23) is inserted, and is arranged so as to face the cooling device (8) in the axial direction of the rotary shaft (23) under a state in which the rotary shaft (23) is inserted into the second through hole (41).

6. The rotary machine of any one of claims 1 to 5,
wherein the circuit unit (15) comprises a circuit board (2) on which a heat generating component is mounted.

7. The rotary machine of claim 6,
wherein the circuit board (2) has a plurality of the heat generating components mounted thereon, and is arranged so that the plurality of heat generating components face the cooling device (8),
wherein the cooling device (8) has a wall portion, which faces the plurality of heat generating components and has a surface having a convexoconcave shape offsetting irregularities among heights of the plurality of heat generating components, and
wherein the surface of the wall portion is in contact with the plurality of heat generating components.

8. The rotary machine of claim 6 or 7,
wherein the heat generating component comprises a high heat generating component (3) and a low heat generating component (4), and
wherein the cooling device (8) has a heat-radiating fin (9) protruding toward an inside of the cooling flow passage (10) on a part of an inner wall of the wall portion being in contact with the circuit unit (15), the part facing the high heat generating component (3).

9. The rotary machine of claim 8,
wherein the heat-radiating fin (9) extends in a main flow direction of the cooling liquid, and
both ends of the heat-radiating fin (9) in the main flow direction of the cooling liquid have a tapered shape in which a fin thickness is gradually reduced toward both tips of the heat-radiating fin (9), the fin thickness being a length of the heat-radiating fin (9) between a pair of side surfaces along the main flow direction in a direction perpendicular to the main flow direction.

10. The rotary machine of claim 9,
wherein the heat-radiating fin (9) has an acute tip angle of 90 degrees or less.

11. A vehicle, comprising the rotary machine of any one of claims 1 to 10.

12. The vehicle of claim 11, further comprising:
- a radiator (18); and
- a pump (17),
wherein the cooling liquid is circulated through the cooling flow passage (10) in the cooling device (8), the radiator (18), and the pump (17).

13. The vehicle of claim 12,
wherein the rotary machine main body (21 a) has a cooling flow passage formed therein, and
wherein the cooling liquid also passes through the cooling flow passage in the rotary machine main body (21 a).

14. The vehicle of claim 13,
wherein the cooling flow passage in the rotary machine main body (21 a) and the cooling flow passage (10) in the cooling device (8) are connected in series.

15. The vehicle of claim 14,
wherein the cooling flow passage in the rotary machine main body (21 a) and the cooling flow passage (10) in the cooling device (8) are connected in parallel.
